(19) Europäisches Patentamt
European Patent Office
Office européen des brevets

(11) Veröffentlichungsnummer : **0 076 985**
**B1**

(12) **EUROPÄISCHE PATENTSCHRIFT**

(45) Veröffentlichungstag der Patentschrift : **05.06.85**

(51) Int. Cl.[4] : **C 07 F 7/18**

(21) Anmeldenummer : **82109093.3**

(22) Anmeldetag : **01.10.82**

# (54) Verfahren zur Herstellung von Alpha-Dicyano-trimethyl-silyloxy-Verbindungen (I).

(30) Priorität : **13.10.81 DE 3140632**

(43) Veröffentlichungstag der Anmeldung : **20.04.83 Patentblatt 83/16**

(45) Bekanntmachung des Hinweises auf die Patenterteilung : **05.06.85 Patentblatt 85/23**

(84) Benannte Vertragsstaaten : **AT BE CH DE FR GB IT LI NL**

(56) Entgegenhaltungen :
**GB-A- 2 067 211**
**TETRAHEDRON LETTERS, Nr. 17, April 1973, Seiten 1449-1450, Pergamon Press, G.B. WERNER LIDY et al.: "Spaltungsreaktionen des Trimethylsilylcyanids durch Epoxyde Carbonsäurechloride, Chlorkohlensäureester und Sulfenylchloride"**

(73) Patentinhaber : **BAYER AG**
**Konzernverwaltung RP Patentabteilung**
**D-5090 Leverkusen 1 Bayerwerk (DE)**

(72) Erfinder : **Findeisen, Kurt, Dr.**
**In der Follmühle 10**
**D-5068 Odenthal 2 (DE)**

**EP 0 076 985 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein chemisch eigenartiges Verfahren zur Herstellung von teilweise bekannten α-Dicyano-trimethyl-silyloxy-Verbindungen.

Es ist bereits bekannt geworden α-Dicyano-trimethyl-silyloxy-Verbindungen durch Umsetzung von Carbonsäurechloriden mit Trimethylsilylcyanid zu synthetisieren. (Chem. Ber. *106*, 587 (1973) ; Tetrahedron Letters No. *17*, pp. 1449-1450 (1973)).

Überraschenderweise wurde nun gefunden, daß man α-Dicyano-trimethyl-silyloxy-Verbindungen der Formel (I)

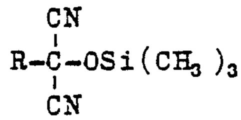

(I)

in welcher

R für gegebenenfalls substituiertes Alkyl mit 1 bis 8 Kohlenstoffatomen, gegebenenfalls substituiertes Cycloalkyl mit 3 bis 12 Kohlenstoffatomen, gegebenenfalls substituiertes Aryl oder für einen gegebenenfalls substituierten 5- oder 6-gliedrigen heterocyclischen Rest steht, der zusätzlich noch mit einem Benzolring anelliert sein kann,

sowie für den Rest

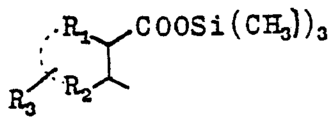

steht, wobei

$R^1$ und $R^2$ gleich oder verschieden sind und für Wasserstoff, einen gegebenenfalls substituierten Alkylrest mit 1 bis 8 Kohlenstoffatomen, sowie gemeinsam mit den angrenzenden C-Atomen einen cycloaliphatischen Ring mit 1 bis 5 Kohlenstoffatomen, sowie gemeinsam mit den angrenzenden C-Atomen einen aromatischen oder heteroaromatischen Ring darstellen,

und

$R^3$ für Wasserstoff, Halogen, Nitro, Alkoxy, Carbalkoxy, cyclisches Anhydrid, für gegebenenfalls substituiertes Alkyl mit 1 bis 8 Kohlenstoffatomen, gegebenenfalls substituiertes Cycloalkyl, das mit dem Aromaten anelliert sein kann, gegebenenfalls substituiertes Aryl, das mit dem Aromaten anelliert sein kann, oder für einen gegebenenfalls substituierten 5- oder 6-gliedrigen heterocyclischen Rest steht, der an dem Aromaten kondensiert sein kann,

in sehr hoher Ausbeute und ausgezeichneter Reinheit erhält, wenn man Carbonsäureanhydride der Formel II

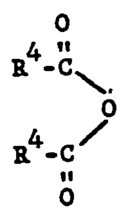

(II)

in welcher die Reste

$R^4$ für gegebenenfalls substituiertes Alkyl mit 1 bis 8 Kohlenstoffatomen, gegebenenfalls substituiertes Cycloalkyl mit 3 bis 12 Kohlenstoffatomen, gegebenenfalls substituiertes Aryl oder für einen gegebenenfalls substituierten 5- oder 6-gliedrigen heterocyclischen Rest stehen, der zusätzlich noch mit einem Benzolring anelliert sein kann, sowie gemeinsam für den Rest

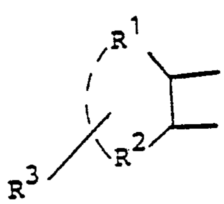

stehen, wobei

$R^1$, $R^2$ und $R^3$ die oben angegebene Bedeutung haben

mit Trimethylsilylcyanid, gegebenenfalls in Gegenwart eines Lösungsmittels und/oder gegebenenfalls in Gegenwart eines Katalysators, bei Temperaturen zwischen 10 und 250 °C umsetzt.

Es ist als ausgesprochen überraschend zu bezeichnen, daß α-Dicyano-trimethyl-silyloxy-Verbindungen der allgemeinen Formel (I) nach dem erfindungsgemäßen Verfahren in hoher Ausbeute und

ausgezeichneter Reinheit zugänglich sind. So ist z. B. die Umsetzung von cyclischen aromatischen Carbonsäureanhydriden der Formel (II) mit wasserfreier Blausäure erfolglos.

Das erfindungsgemäße Verfahren besitzt eine Reihe von Vorteilen. So ist es nicht auf die Synthese weniger bestimmter Verbindungen beschränkt, sondern es läßt sich breit anwenden. Weiterhin liefert das erfindungsgemäße Verfahren α-Dicyano-trimethyl-silyloxy-Verbindungen in hoher Ausbeute und ausgezeichneter Reinheit.

Ein zusätzlicher entscheidender Vorteil des erfindungsgemäßen Verfahrens besteht darin, daß die Aufarbeitung keine Probleme bietet. Die im Verlauf der Reaktion entstehenden Trimethylsilylester können durch Destillation leicht von den α-Dicyano-trimethylsilyloxy-Verbindungen getrennt werden.

Verwendet man Benzoesäureanhydrid und Trimethylsilylcyanid als Ausgangsstoffe, so kann der Reaktionsverlauf durch das folgende Formelschema a) wiedergegeben werden :

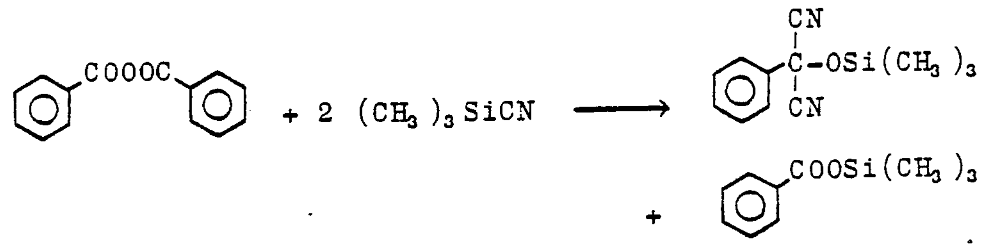

Verwendet man Phthalsäureanhydrid und Trimethylsilylcyanid als Ausgangsstoffe, so kann der Reaktionsverlauf durch das folgende Formelschema b) wiedergegeben werden :

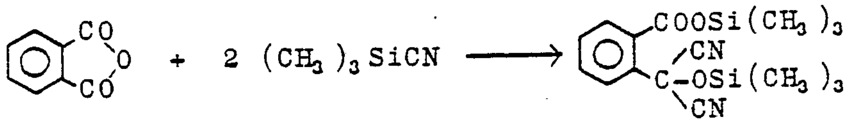

Die als Ausgangsstoffe verwendeten Säureanhydride sind durch die Formel (II) allgemein definiert. Sie sind bekannt oder können nach bekannten Verfahren hergestellt werden.

In Formel (II) steht $R^4$ vorzugsweise für geradkettiges oder verzweigtes Alkyl mit 1 bis 4 Kohlenstoffatomen, wobei jeder dieser Alkylreste substituiert sein kann durch Alkoxy mit 1 bis 4 Kohlenstoffatomen, Carbalkoxy mit 1 bis 4 Kohlenstoffatomen in der Alkoxygruppe, Nitro, Nitril und/oder Halogen, wie Fluor, Chlor oder Brom. Ferner steht $R^4$ vorzugsweise für gegebenenfalls durch Alkyl, Alkoxy oder Carbalkoxy mit jeweils bis zu 4 Kohlenstoffatomen, Nitro, Nitril und/oder Halogen, wie Fluor, Chlor und Brom, substituiertes Cycloalkyl mit 5 oder 6 Kohlenstoffatomen im Ringsystem. Weiterhin steht $R^4$ vorzugsweise für gegebenenfalls durch Alkyl, Alkoxy oder Carbalkoxy mit jeweils bis zu 4 Kohlenstoffatomen, Nitro und/oder Halogen, wie zum Beispiel Fluor, Chlor und Brom, substituiertes Aryl, insbesondere Phenyl oder Naphthyl. Schließlich steht $R^4$ vorzugsweise für gegebenenfalls durch Alkyl, Alkoxy oder Carbalkoxy mit jeweils bis zu 4 Kohlenstoffatomen, Nitro, Nitril und/oder Halogen, wie z. B. Fluor, Chlor und Brom, substituierte 5- oder 6-gliedrige heterocyclische Reste, die 1 bis 3 Heteroatome wie Sauerstoff, Schwefel und/oder Stickstoff im Ring enthalten können und außerdem mit einem Benzolring anelliert sein können.

Als Beispiele für solche in Frage kommende heterocyclische Reste seien genannt : Morpholinyl, Imidazolyl, Pyrazolyl, Pyrrolyl, Isoxazolyl, Piperidinyl, Oxazolyl, 1,2,4-Triazol-1-yl, 1,2,4-Triazol-4-yl, 1,2,3-Triazolyl, 1,2,4-Thiadiazol-2-yl, benzimidazolyl und Furanyl.

Für den Fall, daß in Formel II die beiden Reste $R^4$ für den Rest

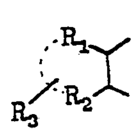

stehen, sind $R^1$ und $R^2$ bevorzugt gleich oder verschieden und stehen insbesondere für Wasserstoff, einen gegebenenfalls substituierten Alkylrest mit 1 bis 8 Kohlenstoffatomen und gemeinsam für einen cycloaliphatischen Ring mit 1 bis 5 Kohlenstoffatomen, sowie gemeinsam für einen aromatischen oder heterocyclischen Ring. $R^3$ steht vorzugsweise für Wasserstoff, Halogen, wie Fluor, Chlor, Brom, Nitro, Alkoxy mit 1 bis 4 Kohlenstoffatomen, Carbalkoxy mit 1 bis 6 Kohlenstoffatomen, cyclisches Anhydrid, geradkettiges oder verzweigtes Alkyl mit 1 bis 8 Kohlenstoffatomen, Cycloalkyl mit 5- oder 6 Kohlenstoffatomen im Ringsystem, das mit dem Aromaten anelliert sein kann, durch Alkyl, Alkoxy oder Carbalkoxy mit jeweils bis zu 4 Kohlenstoffatomen, Nitro, Nitril und/oder Halogen, wie z. B. Fluor, Chlor und Brom, substituierte 5- oder 6-gliedrige heterocyclische Reste, die 1 bis 3 Heteroatome wie Sauerstoff, Schwefel und/oder Stickstoff im Ring enthalten können und außerdem mit einem Benzolring anelliert sein können. Als Beispiele für bevorzugt in Frage kommende aromatische Reste seien genannt Phenyl oder Naphthyl, insbesondere Phenyl.

Als Beispiele für bevorzugt in Frage kommende heterocyclische Reste seien genannt : Morpholinyl, Imidazolyl, Pyrazolyl, Pyrrolyl, Isoxazolyl, Piperidinyl, Oxazolyl, 1,2,4-Triazol-1-yl, 1,2,4-Triazol-4-yl, 1,2,3-Triazolyl, 1,2,4-Thiadiazol-2-yl, Benzimidazolyl und Furanyl.

Als bevorzugte Beispiele für Säureanhydride der Formel (II) seien im einzelnen genannt : Essigsäureanhydrid, Propionsäureanhydrid, Pivalinsäureanhydrid, Cyclohexancarbonsäureanhydrid, Benzoesäureanhydrid, m-Chlorbenzoesäureanhydrid, p-Chlorbenzoesäureanhydrid, 3,5-Dichlorbenzoesäureanhydrid, Naphthalin-1-carbonsäureanhydrid, 1-Phenyl-5-pyrazolon-3-carbonsäureanhydrid. Als besonders bevorzugte Anhydride seien insbesondere das Benzoesäureanhydrid und das Pivalinsäureanhydrid genannt.

Als weitere bevorzugte Beispiele für cyclische aliphatische, cycloaliphatische, aromatische, heteroaromatische Carbonsäureanhydride der Formel (II) seien genannt :

Bernsteinsäureanhydrid, Glutarsäureanhydrid, Cyclopentandicarbonsäureanhydrid, Hexahydrophthalsäureanhydrid, Tetrahydrophthalsäureanhydrid, Phthalsäureanhydrid, 4-Nitrophthalsäureanhydrid, 4-Chloro-phthalsäureanhydrid, 3-Chloro-phthalsäureanhydrid, 4-Hydroxyphthalsäureanhydrid, Naphthalsäureanhydrid, Pyromellitsäuredianhydrid, Trimellitsäureanhydrid, Pyridindicarbonsäureanhydrid.

Als Verdünnungsmittel, die bei der Durchführung des erfindungsgemäßen Verfahrens eingesetzt werden können, kommen alle inerten organischen Lösungsmittel, die weder mit den Carbonsäureanhydriden noch dem Trimethylsilylcyanid eine chemische Reaktion eingehen, in Betracht. Solche Lösungsmittel sind beispielsweise Xylole wie o-Xylol, Chlorobenzol, o-Dichlorbenzol, die Trichlorobenzole, Nitrobenzol, Tetramethylensulfon. Prinzipiell ist es jedoch auch möglich, die erfindungsgemäße Umsetzung ohne Verdünnungsmittel durchzuführen.

Die Reaktionstemperatur kann in einem größeren Bereich variiert werden. Im allgemeinen arbeitet man bei Temperaturen zwischen 0 und 250 °C, vorzugsweise zwischen 20 und 180 °C.

Die Reaktion wird im allgemeinen bei Normaldruck durchgeführt. Bei Verwendung von niedrigsiedenden, aliphatischen Carbonsäureanhydriden ist jedoch ein leichter Überdruck günstig, dann im allgemeinen von 1,013 bis 10,13 vorzugsweise von 1,013 bis 5,065 bar (1-5 Atm) Überdruck.

Durch Zusatz von katalytischen Mengen Lewis-Saüre kann die Umsetzung beschleunigt werden.

Als geeignete Lewis-Säuren sind beispielhaft zu nennen : Zinkchlorid, Zinkcyanid, Kupfer-(I)-cyanid, Zinkjodid, Aluminiumchlorid, Bortrifluorid.

Bei der Durchführung des erfindungsgemäßen Verfahrens setzt man im allgemeinen ein Mol an Säureanhydrid mit zwei Mol Trimethylsilylcyanid um.

Die Aufarbeitung erfolgt nach beendeter Umsetzung üblicherweise durch Destillation und gegebenenfalls Umkristallisation.

Auch in der Gasphase kann das Gemisch aus Säureanhydrid und Trimethylsilylcyanid ohne besondere Anwendung von Katalysatoren, erfindungsgemäß umgesetzt werden.

Weiterhin ist es möglich, das erfindungsgemäße Verfahren kontinuierlich zu gestalten.

Die nach dem erfindungsgemäßen Verfahren leicht zugänglichen α-Dicyano-trimethyl-silyloxy-Verbindungen lassen sich beispielsweise zur Synthese von Insektiziden einsetzen. So lassen sich z. B. aus ihnen durch Verseifung die substituierten Hydroxymalonsäurediamide, Verbindungen mit hoher insektizider Potenz, z. B. gemäß der folgenden Gleichung, herstellen :

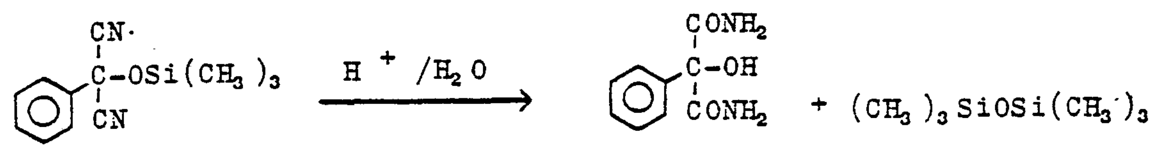


Beispiel 1

In einen mit Rührer, Thermometer, Rückflußkühler und Tropftrichter bestückten 500 ml Vierhalskolben werden 226 g Benzoesäureanhydrid (1 Mol) auf 170 °C erhitzt und innerhalb von drei Stunden 200 g Trimethylsilylcyanid (2 Mol) hinzugetropft. Danach wird dreißig Minuten bei dieser Temperatur gerührt und nach dem Erkalten fraktioniert destilliert.

Ausbeute : 222 g α-Dicyano-(phenyl)-(trimethylsiloxy)-methan (= 97 % der Theorie)

Sdp. : 128-129 °C bei 14 mbar.

Beispiel 2

In einem 500 ml Dreihalskolben werden 186 g Pivalinsäureanhydrid (1 Mol), 198 g Trimethylsilylcyanid (2 Mol) und 1 g Zinkchlorid von anfänglich 140 °C innerhalb von drei Stunden auf 170 °C erwärmt. Im IR-Spektrum sind die Anhydrid-Banden verschwunden. Nach dem Erkalten wird fraktioniert destilliert.

Ausbeute : 193 g Dicyano-(tert.-butyl)-(trimethylsiloxy)-methan (= 92 % der Theorie).

Sdp. : 70-72 °C bei 16 mbar.

Nach den Beispielen 1 und 2 wurden die folgenden α-Dicyano-trimethyl-silyloxy-Verbindungen synthetisiert.

| Nr. | Ausgangsprodukt | Endprodukt | Ausbeute (%) | Sdp. (°C) (mbar) |
|---|---|---|---|---|
| 3 | 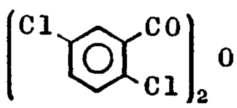 | 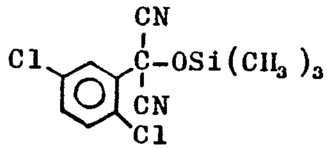 | 87 | 113-116 / 0,2<br>Fp. 62-64 |
| 4 | $(CH_3CO)_2O$ | 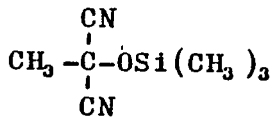 | 84 | 62-64/18 |
| 5 | $(CH_3CH_2-CO)_2O$ | 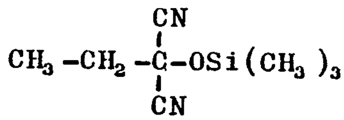 | 89 | 63-65/18 |
| 6 | 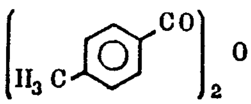 | 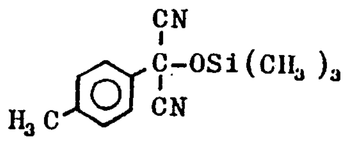 | 94 | 140-143/18 |
| 7 | 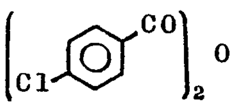 | 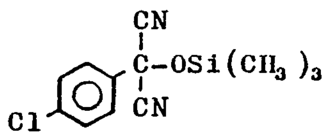 | 93 | 147-149/16 |
| 8 | 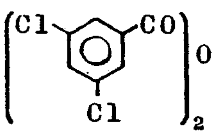 | 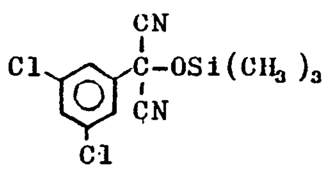 | 91 | 119-121/0,2 |
| 9 | 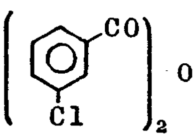 | 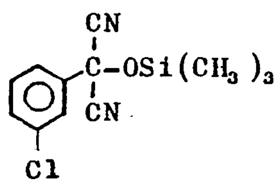 | 97 | 143-146/16 |
| 10 | 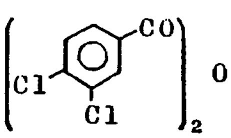 | 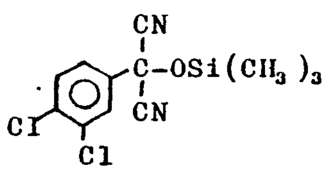 | 93 | 113-116/0,1 |
| 11 | 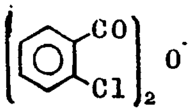 | 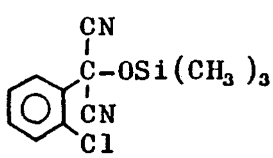 | 91 | 107-110/0,2 |

(Fortsetzung)

| Nr. | Ausgangsprodukt | Endprodukt | Ausbeute (%) | Sdp. (°C) (mbar) |
|---|---|---|---|---|
| 12 | 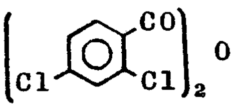 | 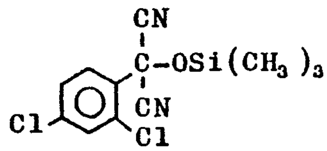 | 88 | 126-130/0,2 |
| 13 | 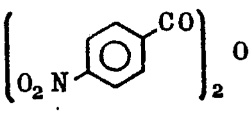 | 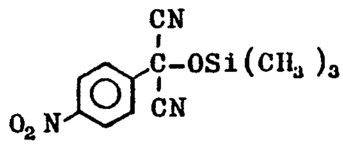 | 86 | 153-156/0,5 |
| 14 | 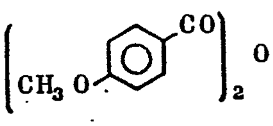 | 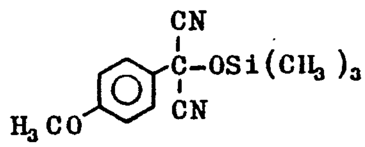 | 98 | 140-142/0,5 |
| 15 | 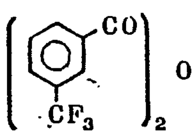 | 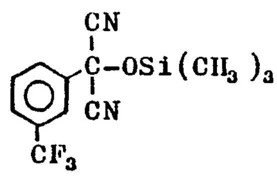 | 91 | 117-119/16 |
| 16 | 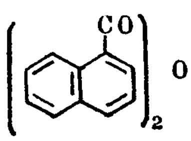 | 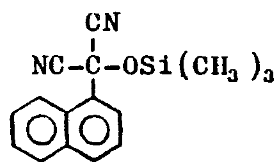 | 87 | 157-160/0,5 |
| 17 | 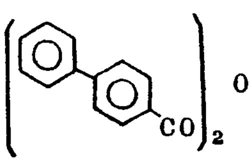 | 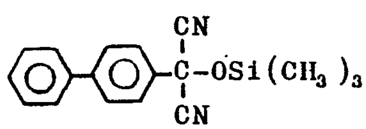 | 91 | 165-170/0,3 |
| 18 | 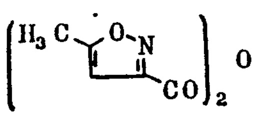 | 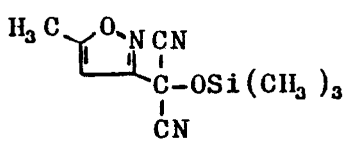 | 93 | 136-138/16 |
| 19 | 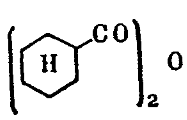 | 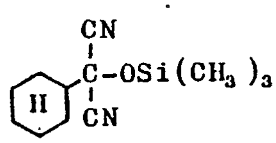 | 98 | 123-125/16 |
| 20 | 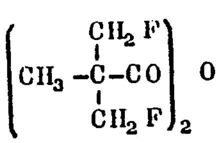 | 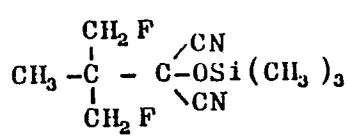 | 91 | 97-100/16 |

(Fortsetzung)

| Nr. | Ausgangsprodukt | Endprodukt | Ausbeute (%) | Sdp. (°C) (mbar) |
|---|---|---|---|---|
| 21 | $(CH_3OCH_2-CO)_2O$ | 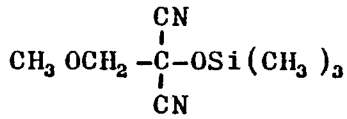 | 88 | 98-100/18 |
| 22 | $(CCl_3-CO)_2O$ | 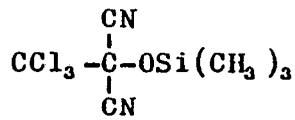 | 90 | 90-92/14 |
| 23 | 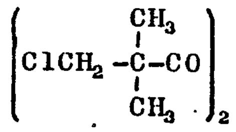 | 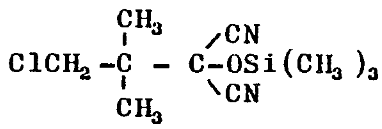 | 91 | 104-106/16 |
| 24 | 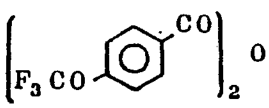 | 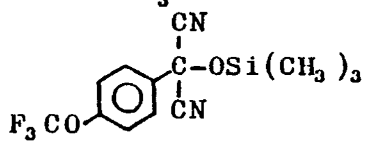 | 87 | 129-132/18 |

## Beispiel 25

In einem mit Rührer, Thermometer, Rückflußkühler und Tropftrichter bestückten 500 ml Vierhalskolben werden 148 g Phthalsäureanhydrid (1 Mol) auf 180 °C erwärmt, mit 1 g Aluminiumchlorid versetzt und innerhalb von zwei Stunden 200 g Trimethylsilylcyanid (2,02 Mol) (bei dieser Temperatur) zugetropft. Anschließend eine Stunde nachgerührt. Das Reaktionsprodukt wird fraktioniert destilliert.

Ausbeute : 318 g {Dicyano-[(2-trimethyl-siloxycarbonyl)-phenyl]-methoxy}-trimethylsilan (= 92 % der Theorie)

Sdp. : 145-147 °C bei 0,3 mbar

Im Vorlauf befand sich nicht umgesetztes Phthalsäureanhydrid.

## Beispiel 26

In einem mit Rührer, Thermometer und Rückflußkühler bestückten 500 ml Dreihalskolben werden 154 g Hexahydrophthalsäureanhydrid (1 Mol) mit 198 g Trimethylsilylcyanid (2 Mol) bei Raumtemperatur gemischt und die Innentemperatur innerhalb einer Stunde auf 110 °C gesteigert. Dann wird drei Stunden bei dieser Temperatur nachgerührt. Das Reaktionsprodukt kann ohne weitere Reinigung verwendet werden.

Ausbeute : 348 g {Dicyano-[(2-trimethyl-siloxycarbonyl)-cyclohexyl]-methoxy}-trimethylsilan (= 99 % der Theorie)

Sdp. : 134-136 °C bei 0,45 mbar

## Beispiel 27

In einem 500 ml Dreihalskolben mit Rührer, Thermometer und Rückflußkühler werden 114 g Glutarsäureanhydrid (1 Mol) und 198 g Trimethylsilylcyanid (2 Mol) gemischt. Dabei tritt eine leichte exotherme Reaktion bis 40 °C ein. Nach 2 Stunden wird die Innentemperatur auf 70 °C gesteigert und für drei Stunden bei dieser Temperatur belassen. Das Reaktionsprodukt wird fraktioniert destilliert.

Ausbeute : 294 g {Dicyano-[(2-trimethyl-siloxycarbonyl)-propyl]-methoxy}-trimethylsilan (= 94 % der Theorie)

Sdp. : 103-105 °C bei 0,2 mbar

## Beispiel 28

In einem 750 ml Vierhalskolben bestückt mit Rührer, Thermometer, Rückflußkühler und Tropftrichter werden 218 g Pyromellitsäuredianhydrid (1 Mol) mit 198 g Trimethylsilylcyanid (2 Mol) auf 120 °C

erwärmt. Nach ca. einer Stunde ist die Innentemperatur auf 160 °C gestiegen und innerhalb weiterer zwei Stunden werden 198 g Trimethylsilylcyanid (2 Mol) bei dieser Temperatur zugetropft. Die Umsetzung wird IR-spektroskopisch verfolgt. Nachdem das Anhydrid fast vollständig umgesetzt ist wird die Umsetzung beendet. Das Reaktionsprodukt wird aus wenig Cyclohexan umkristallisiert.

Ausbeute 527 g
Fp. : 211-212 °C

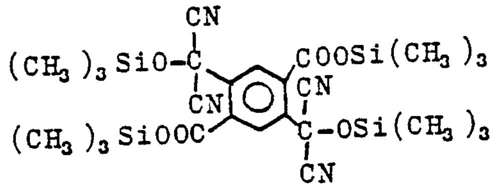

Beispiel 29

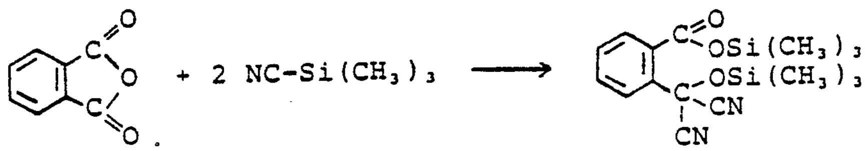

148 g (1 Mol) Phthalsäure-anhydrid werden mit 2 g Natriumcyanid vorgelegt und langsam mit 198 g (2 Mol) Trimethylsilylcyanid versetzt. Die exotherme Reaktion wird mit einer Eiskühlung bei 60 °C gehalten. Die Reaktionsmischung ergibt nach einer Rührzeit von 15 Minuten eine klare schwachgelbe Lösung.

Die spektroskopische Untersuchung mittels IR und KR ergab reines Reaktionsprodukt.
$Kp_{0,2\ mbar}$ : 145-147 °C, Menge : 335,6 g
Ausbeute : 97 % der Theorie

Beispiel 30

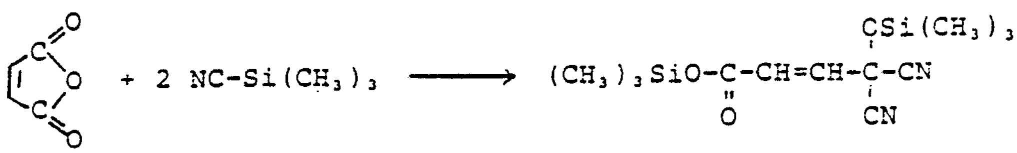

198 g (2 Mol) Trimethylsilylcyanid und 1 g Triethylendiamin werden vorgelegt. Bei einer mit Eiskühlung gehaltenen Temperatur von 40-50 °C trägt man 98 g (1 Mol) Maleinsäureanhydrid ein. Die Reaktionsmischung wird 30 Minuten bei 50 °C nachgerührt und destilliert.
$Kp_{0,6\ mbar}$ : 125-126 °C, Menge : 269,4 g
Ausbeute : 91 % der Theorie

Beispiel 31

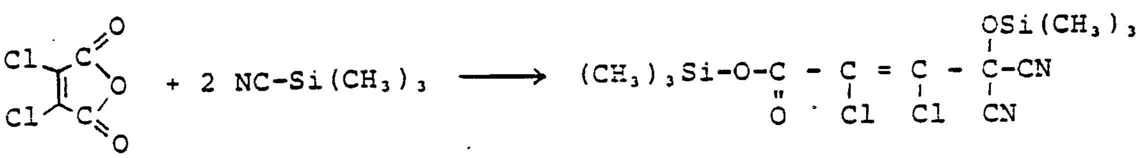

198 g (2 Mol) Trimethylsilylcyanid und 2 ml N,N-Dimethylbenzylamin werden vorgelegt, unter Rühren 167 g (1 Mol) Dichlormaleinsäure-anhydrid eingetragen. Die exotherme Reaktion hält man durch Eiskühlung bei 40-50 °C. Das Gemisch wird destillativ gereinigt.

I $Kp_{20\ mbar}$ : 95-120 °C, Menge : 82 g
GC : 95 % Dichlormaleinsäure-anhydrid
4,5 % Reaktionsprodukt
II $Kp_{20\ mbar}$ : 148-152 °C, Menge : 191,4 g
GC : 98,5 % Reaktionsprodukt
Ausbeute nach GC : 53,4 % der Theorie

Beispiel 32

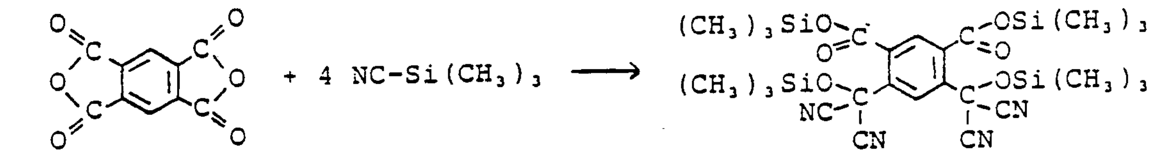

109 g (0,5 Mol) Benzo-1,2,4,5-tetracarbonsäure-anhydrid werden mit 198 g (2 Mol) Trimethylsilylcyanid und 2 ml Triethylamin vermischt. Die exotherme Reaktion wird mit Eiskühung bei 40-50 °C gehalten. Die Reaktionsmischung wird fest. Das Produkt wird durch umkristallisieren aus Wachbenzin gereinigt.
Menge : 239,5 g, Fp : 203-205 °C
Ausbeute : 78 % der Theorie

Beispiel 33

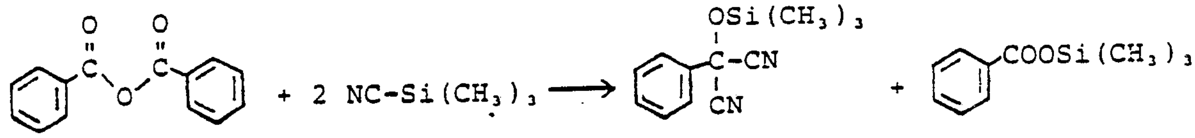

113 g (0,5 Mol) Benzoesäure-Anhydrid, 1 g Triethylendiamin und 99 g (1 Mol) trimethylsilylcyanid werden unter Rühren zusammengegeben. Die exotherme Reaktion zeigt einen Temperaturanstieg auf 48 °C. Man rührt 30 Minuten bei 40-50 °C nach und destilliert das Reaktionsgemisch.
I $Kp_{14\ mbar}$ : 96-98 °C, Menge : 95 g
II $Kp_{14\ mbar}$ : 128-130 °C, Menge 112,7 g
Ausbeute : 98 % der Theorie an Dicyano-(phenyl)-(trimethylsiloxy)-methan
97,8 % der Theorie an Benzoesäuretrimethylsilylester.

| Ausgangsprodukt | Endprodukt | Ausbeute (%) | Kp (°C) (mbar) |
|---|---|---|---|
| 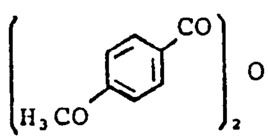 | 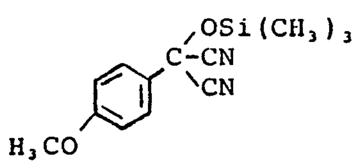 | 99 | 140 - 142/0,5 |
| 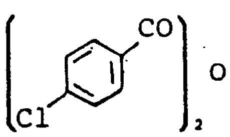 | 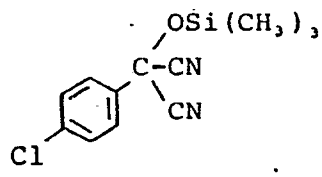 | 90 | 147 - 149/16 |
| 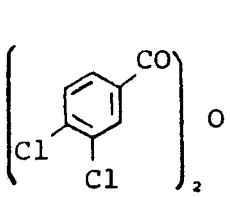 | 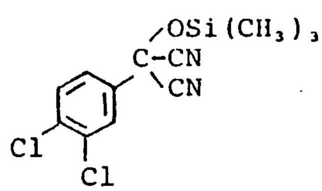 | 96 | 113 - 116/0,1 |
| $[(CH_3)_3C-CO]_2O$ | 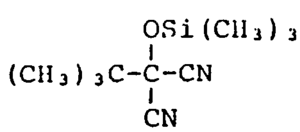 | 98 | 72 - 74/16 |
| 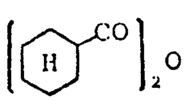 | 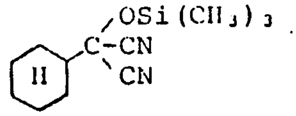 | 97 | 124 - 126/16 |

**Patentansprüche**

1. Verfahren zur Herstellung von α-Dicyanotrimethyl-silyloxy-Verbindungen der Formel (I)

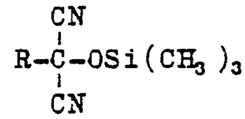

(I)

in welcher
R für gegebenenfalls substituiertes Alkyl mit 1 bis 8 Kohlenstoffatomen, gegebenenfalls substituiertes Cycloalkyl mit 3 bis 12 Kohlenstoffatomen, gegebenenfalls substituiertes Alkyl oder für einen gegebenenfalls substituierten 5- oder 6-gliedrigen heterocyclischen Rest steht, der zusätzlich noch mit einem Benzolring anelliert sein kann, sowohl für den Rest

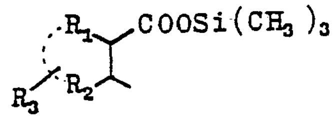

steht, wobei
$R^1$ und $R^2$ gleich oder verschieden sind und für Wasserstoff, einen gegebenenfalls substituierten Alkylrest mit 1 bis 8 Kohlenstoffatomen, sowie gemeinsam mit den angrenzenden C-Atomen einen cycloaliphatischen Ring mit 1 bis 5 Kohlenstoffatomen, sowie gemeinsam mit den angrenzenden C-Atomen einen aromatischen oder heteroaromatischen Ring darstellen,
und
$R^3$ für Wasserstoff, Halogen, Nitro, Alkoxy, Carbalkoxy, cyclisches Anhydrid, für gegebenenfalls substituiertes Alkyl mit 1 bis 8 Kohlenstoffatomen, gegebenenfalls substituiertes Cycloalkyl, das mit dem Aromaten anelliert sein kann, gegebenenfalls substituiertes Aryl, das mit dem Aromaten anelliert sein kann, oder für einen gegebenenfalls substituierten 5- oder 6-gliedrigen heterocyclischen Rest steht, der an dem Aromaten kondensiert sein kann, dadurch gekennzeichnet, daß man Carbonsäureanhydride der Formel II

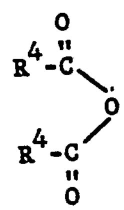

(II)

in welcher die Reste
$R^4$ für gegebenenfalls substituiertes Alkyl mit 1 bis 8 Kohlenstoffatomen, gegebenenfalls substituiertes Cycloalkyl mit 3 bis 12 Kohlenstoffatomen, gegebenenfalls substituiertes Aryl oder für einen gegebenenfalls substituierten 5- oder 6-gliedrigen heterocyclischen Rest stehen, der zusätzlich noch mit einem Benzolring anelliert sein kann, sowie gemeinsam für den Rest

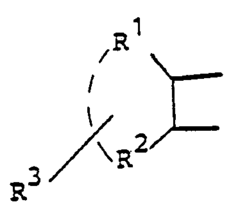

stehen, wobei
$R^1$, $R^2$ und $R^3$ die oben angegebene Bedeutung haben, mit Trimethylsilylcyanid, gegebenenfalls in Gegenwart eines Lösungsmittels und/oder gegebenenfalls in Gegenwart eines Katalysators, bei Temperaturen zwischen 10 und 250 °C umsetzt.

2. Verfahren nach Anspruch 1, dadurch gekennzeichnet, daß man die Umsetzung vorzugsweise zwischen 80 und 190 °C durchführt.

3. Verfahren gemäß Anspruch 1, dadurch gekennzeichnet, daß als Carbonsäureanhydride der Formel (II) aromatische Carbonsäureanhydride eingesetzt werden.

**Claims**

1. Process for the preparation of α-dicyanotrimethylsilyloxy compounds of the formula (I)

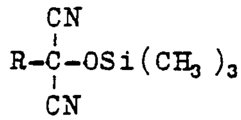

(I)

in which

R represents optionally substituted alkyl with 1 to 8 carbon atoms, optionally substituted cycloalkyl with 3 to 12 carbon atoms, optionally substituted aryl or an optionally substituted 5- or 6-membered heterocyclic radical, which can additionally be fused with a benzene ring, or the radical

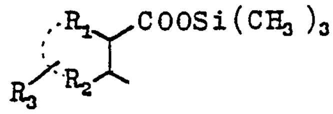

wherein

$R^1$ und $R^2$ are identical or different and represent hydrogen, an optionally substituted alkyl radical with 1 to 8 carbon atoms, or together with the adjacent C atoms represent a cycloaliphatic ring with 1 to 5 carbon atoms, or together with the adjacent C atoms represent an aromatic or heteroaromatic ring, and $R^3$ represents hydrogen, halogen, nitro, alkoxy, carbalkoxy, a cyclic anhydride, optionally substituted alkyl with 1 to 8 carbon atoms, optionally substituted cycloalkyl, which can be fused with the aromatic ring, optionally substituted aryl, which can be fused with the aromatic ring, or an optionally substituted 5- or 6-membered heterocyclic radical, which can be fused to the aromatic ring, characterised in that carboxylic acid anhydrides of the formula II

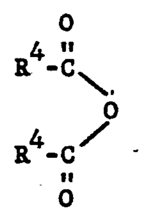

(II)

in which the radicals

$R^4$ represent optionally substituted alkyl with 1 to 8 carbon atoms, optionally substituted cycloalkyl with 3 to 12 carbon atoms, optionally substituted aryl or an optionally substituted 5- or 6-membered heterocyclic radical, which can additionally be fused with a benzene ring, or together represent the radical

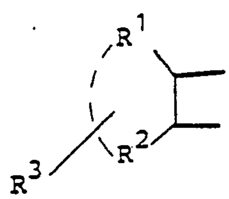

wherein

$R^1$, $R^2$ und $R^3$ have the meaning indicated above, are reacted with trimethylsilyl cyanide, if appropriate in the presence of a solvent and/or if appropriate in the presence of a catalyst, at temperatures between 10 and 250 °C.

2. Process according to Claim 1, characterised in that the reaction is preferably carried out at between 80 and 190 °C.

3. Process according to Claim 1, characterised in that aromatic carboxylic acid anhydrides are used as the carboxylic acid anhydrides of the formula (II).

**Revendications**

1. Procédé pour la fabrication de composés α-dicyanotriméthylsilyloxy de formule (I)

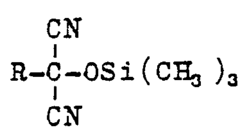

(I)

dans laquelle

R représente un groupe alkyle en $C_1$-$C_8$ éventuellement substitué, un groupe cycloalkyle en $C_3$-$C_{12}$ éventuellement substitué, un groupe aryle éventuellement substitué ou un reste hétérocyclique à 5 ou 6 chaînons éventuellement substitué, qui peut encore en outre être condensé avec un noyau benzénique, ainsi que le reste

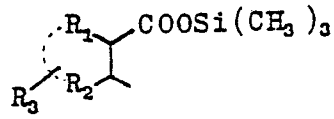

dans lequel

$R^1$ et $R^2$ sont identiques ou différents et représentent chacun l'hydrogène ou un reste alkyle en $C_1$-$C_8$ éventuellement substitué, ou bien $R^1$ et $R^2$ pris ensemble avec les atomes de carbone voisins peuvent représenter un noyau cycloaliphatique en $C_1$-$C_5$ ou bien un noyau aromatique ou hétéroaromatique et $R^3$ représente un atome d'hydrogène ou d'halogène ou un groupe nitro, alcoxy, carbalcoxy, un groupe anhydride cyclique, un groupe alkyle en $C_1$-$C_8$ éventuellement substitué, un groupe cycloalkyle éventuellement substitué qui peut être condensé avec le noyau aromatique, un groupe aryle éventuellement substitué qui peut être accolé avec le noyau aromatique ou un reste hétérocycle à 5 ou 6 chaînons éventuellement substitué, qui peut être condensé avec le noyau aromatique, caractérisé en ce que l'on fait réagir des anhydrides d'acides carboxyliques de formule II

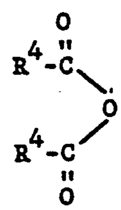

(II)

dans laquelle les restes

$R^4$ représente un groupe alkyle en $C_1$-$C_8$ éventuellement substitué, un groupe cycloalkyle en $C_3$-$C_{12}$ éventuellement substitué, un groupe aryle éventuellement substitué ou un groupe hétérocyclique à 5 ou 6 chaînons éventuellement substitué, qui peut encore être condensé avec un noyau benzénique, ou bien les restes $R^4$ représentent ensemble le reste

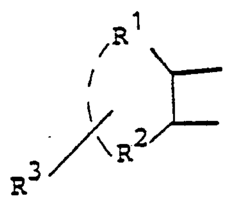

dans lequel

$R^1$, $R^2$ et $R^3$ ont la signification indiquée ci-dessus, avec le cyanure de triméthylsilyle à des températures comprises entre 10 et 250 °C, éventuellement en présence d'un solvant et/ou éventuellement en présence d'un catalyseur.

2. Procédé selon la revendication 1, caractérisé en ce que la réaction est mise en œuvre de préférence entre 80 et 190 °C.

3. Procédé selon la revendication 1, caractérisé en ce que l'on utilise comme anhydrides d'acides carboxyliques de formule (II) des anhydrides d'acides carboxyliques aromatiques.